(19)

Europäisches
Patentamt
European
Patent Office
Office européen
des brevets

(11) **EP 2 375 800 A1**

(12) **EUROPEAN PATENT APPLICATION**
published in accordance with Art. 153(4) EPC

(43) Date of publication:
**12.10.2011 Bulletin 2011/41**

(21) Application number: **09834940.0**

(22) Date of filing: **24.12.2009**

(51) Int Cl.:
*H04W 16/02* (2009.01)    *H04B 1/713* (2011.01)
*H04J 1/00* (2006.01)    *H04J 11/00* (2006.01)
*H04W 72/04* (2009.01)

(86) International application number:
**PCT/JP2009/071431**

(87) International publication number:
**WO 2010/074142 (01.07.2010 Gazette 2010/26)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **26.12.2008 JP 2008335152
06.01.2009 JP 2009001198**

(71) Applicant: **NTT DOCOMO, INC.
Chiyoda-ku
Tokyo 100-6150 (JP)**

(72) Inventors:
• **OKUBO, Naoto
Tokyo 100-6150 (JP)**

• **ISHII, Hiroyuki
Tokyo 100-6150 (JP)**
• **ABETA, Sadayuki
Tokyo 100-6150 (JP)**
• **KISHIYAMA, Yoshihisa
Tokyo 100-6150 (JP)**

(74) Representative: **HOFFMANN EITLE
Patent- und Rechtsanwälte
Arabellastraße 4
81925 München (DE)**

(54) **MOBILE COMMUNICATION SYSTEM, WIRELESS BASE STATION, AND MOBILE STATION**

(57)    In a mobile communication system according to the present invention, a reference signal sequence includes a plurality of signal sequences assigned in slot units in the predetermined physical channel based on a hopping pattern and a sequence shift pattern; the hopping pattern is configured to be determined based on a slot number and an SFN in the predetermined physical channel or the predetermined physical signal; the sequence shift pattern is configured to be determined based on the identification information of the cell to which the physical predetermined channel or the predetermined physical signal has been set; and the hopping cycle is configured to be determined based on a cycle of the slot number and an SFN cycle.

FIG. 5

MOBILE STATION UE AND
RADIO BASE STATION eNB

REFERENCE
SIGNAL
SEQUENCE
ASSIGNMENT
UNIT — 14

HOPPING PATTERN
DETERMINATION UNIT — 11

SEQUENCE SHIFT
PATTERN
DETERMINATION UNIT — 12

HOPPING CYCLE
DETERMINATION UNIT — 13

EP 2 375 800 A1

**Description**

**TECHNICAL FIELD**

The present invention relates to a mobile communication system configured to assign a reference signal sequence repeatedly used with a hopping cycle to at least one of predetermined physical channels and predetermined physical signals of an uplink, a radio base station, and a mobile station.

**BACKGROUND ART**

In a mobile communication system of the LTE (Long Term Evolution) scheme defined in the 3GPP, a reference signal sequence including CAZAC sequences with a high auto-correlation characteristic is configured to be assigned to predetermined physical channels or predetermined physical signals of an uplink.

**SUMMARY OF THE INVENTION**

**PROBLEMS TO BE SOLVED BY THE INVENTION**

Here, in order to reduce inter-cell interference, it is preferable to assign different reference signal sequences between cells.

However, in the mobile communication system of the LTE scheme, since 504 cell IDs are defined but only 30 reference signal sequences are defined, it is necessary to perform complicated cell design in order to reduce the inter-cell interference.

Therefore, the present invention is intended to overcome the above-described problem. An object of the present invention is to provide a mobile communication system capable of reducing inter-cell interference without any complicated cell design although reference signal sequences have been assigned, a radio base station, and a mobile station.

**MEANS FOR SOLVING THE PROBLEM**

A first aspect of the present invention is summarized as a mobile communication system configured to assign a reference signal sequence repeatedly used with a hopping cycle to at least one of a predetermined physical channel and a predetermined physical signal of an uplink, wherein the reference signal sequence includes a plurality of signal sequences assigned in slot units in the predetermined physical channel based on a hopping pattern and a sequence shift pattern; the hopping pattern is configured to be determined based on a slot number and an SFN in the predetermined physical channel or the predetermined physical signal, and identification information of a cell to which the predetermined physical channel or the predetermined physical signal has been set; the sequence shift pattern is configured to be determined based on the identification information of the cell to which the physical predetermined channel or the predetermined physical signal has been set; and the hopping cycle is configured to be determined based on a cycle of the slot number and an SFN cycle.

A second aspect of the present invention is summarized as a radio base station including: a reference signal sequence assignment unit configured to assign a reference signal sequence repeatedly used with a hopping cycle to at least one of a predetermined physical channel and a predetermined physical signal of an uplink; a hopping pattern determination unit configured to determine a hopping pattern, based on a slot number and an SFN in the predetermined physical channel or the predetermined physical signal, and identification information of a cell to which the predetermined physical channel or the predetermined physical signal has been set; a sequence shift pattern determination unit configured to determine a sequence shift pattern, based on the identification information of the cell to which the physical predetermined channel or the predetermined physical signal has been set; and a hopping cycle determination unit configured to determine the hopping cycle, based on a cycle of the slot number and an SFN cycle; wherein the reference signal sequence assignment unit is configured to generate the reference signal sequence using a plurality of signal sequences assigned in slot units in the predetermined physical channel, based on the hopping pattern and the sequence shift pattern.

A third aspect of the present invention is summarized as a mobile station including: a reference signal sequence assignment unit configured to assign a reference signal sequence repeatedly used with a hopping cycle to at least one of a predetermined physical channel and a predetermined physical signal of an uplink; a hopping pattern determination unit configured to determine a hopping pattern, based on a slot number and an SFN in the predetermined physical channel or the predetermined physical signal, and identification information of a cell to which the predetermined physical channel or the predetermined physical signal has been set; a sequence shift pattern determination unit configured to determine a sequence shift pattern, based on the identification information of the cell to which the physical predetermined channel or the predetermined physical signal has been set; and a hopping cycle determination unit configured to determine the hopping cycle, based on a cycle of the slot number and an SFN cycle; wherein the reference signal sequence assignment unit is configured to generate the reference signal sequence using a plurality of signal sequences assigned in slot units in the predetermined physical channel, based on the hopping pattern and the sequence shift pattern.

**EFFECT OF THE INVENTION**

As described above, according to the present invention, it is possible to provide a mobile communication system capable of reducing inter-cell interference without any complicated cell design although reference signal sequences have been assigned, a radio base station, and a mobile station.

**BRIEF DESCRIPTION OF THE DRAWINGS**

[Fig. 1] Fig. 1 is a diagram showing the entire configuration of a mobile communication system according to a first embodiment of the present invention.
[Fig. 2] Fig. 2 is a diagram explaining the "Group hopping" used in a mobile communication system according to the first embodiment of the present invention.
[Fig. 3] Fig. 3 is a diagram explaining the "Group hopping" used in a mobile communication system according to the first embodiment of the present invention.
[Fig. 4] Fig. 4 is a diagram explaining the "Group hoping" used in a mobile communication system according to the first embodiment of the present invention.
[Fig. 5] Fig. 5 is a functional block diagram of a radio base station and a mobile station in a mobile communication system according to the first embodiment of the present invention.

**BEST MODES FOR CARRYING OUT THE INVENTION**

(Mobile communication system according to a first embodiment of the present invention)

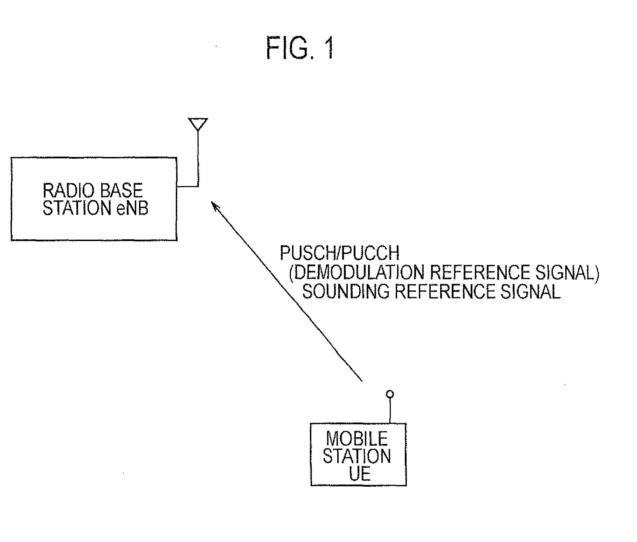

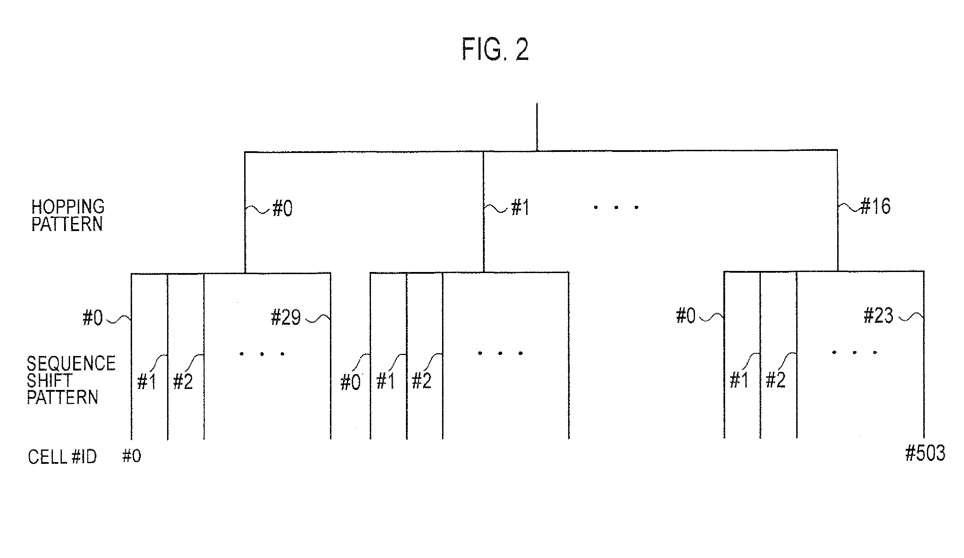

Witch reference to Fig. 1 through Fig. 5, a mobile communication system according to a first embodiment of the present invention will be explained.
In the mobile communication system according to the first embodiment of the present invention, a radio communication of the LTE scheme is configured to be performed between a radio base station eNB and a mobile station UE.
As shown in Fig. 1, in an uplink, the mobile station UE is configured to transmit transmission acknowledgement information ACK/NACK on a physical downlink shared channel (PUSCH), and a control signal of a reception quality (CQI: channel quality indicator) and the like in a downlink via a physical plink control channel (PUCCH).
Furthermore, in an uplink, the mobile station UE is configured to transmit a demodulation reference signal (DRS), a sounding reference signal (SRS) and the like.
Here, the demodulation reference signal is a physical signal configured to be transmitted after being time-multiplexed to a physical uplink shared channel (PUSCH) and the PUCCH.
Furthermore, the sounding reference signal is configured to be used for measuring the reception quality in the uplink, measuring a transmission timing between the radio base station eNB and the mobile station UE, and the like, and to be periodically transmitted independent of the PUSCH and the PUCCH.
In the mobile communication system according to the present embodiment, a reference signal sequence repeatedly used with a hopping cycle is configured to be assigned to at least one of predetermined physical channels (e.g., the PUCCH) and predetermined physical signals (e.g., the demodulation reference signal and the SRS) of the uplink.
Furthermore, the present invention can be applied when the reference signal sequence repeatedly used with the hopping cycle is also assigned to the PUSCH in the future.
That is, in the mobile communication system according to the present embodiment, the radio base station eNB and the mobile station UE are configured to assign the corresponding reference signal sequence to at least one of the predetermined physical channels and the predetermined physical signals of the uplink, so that the reference signal sequence can be used.
Specifically, in the mobile communication system according to the present embodiment, the "Group Hopping" is used.
Here, the reference signal sequence includes a plurality of signal sequences assigned in slot units in a predetermined channel based on hopping patterns and sequence shift patterns.
For example, in the mobile communication system using the "Group Hopping", as shown in Fig. 2, it is possible to generate 504 pseudo reference signal sequences, based on 17 hopping patterns and 30 sequence shift patterns.

Therefore, the number of the types of signal sequences assignable to each slot is only 30. However, in view of the whole of the hopping cycle, it is possible to increase the number of the reference signal sequences in a pseudo manner using different hopping patterns.

Furthermore, a combination of the hopping patterns and the sequence shift patterns is associated with cell identification information (cell IDs) . Here, the cell IDs are Physical Cell IDs (PCIs).

That is, in the mobile communication system according to the present embodiment, it is possible to assign different reference signal sequences to the 504 defined cell IDs, respectively by using the "Group Hopping".

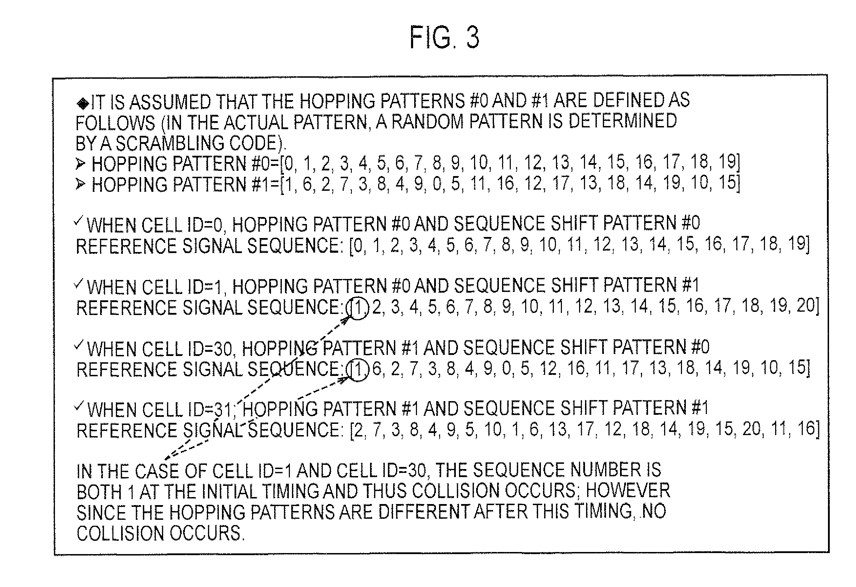

Hereinafter, with reference to Fig. 3, an example of the reference signal sequences generated in the mobile communication system using the "Group Hopping" will be explained. In the example of Fig. 3, a hopping cycle is 10 ms (20 slots).

In the example of Fig. 3, the hopping pattern #0 is "0, 1, 2, 3, 4, 5, 6, 7, 8, 9, 10, 11, 12, 13, 14, 15, 16, 17, 18, 19" and the hopping pattern #1 is "1, 6, 2, 7, 3, 8, 4, 9, 0, 5, 12, 16, 11, 17, 13, 18, 14, 19, 10, 15".

Here, an element constituting each hopping pattern is a sequence number for specifying one of the above-mentioned 30 types of signal sequences (e.g., CAZAC sequences).

Specifically, when the cell ID is 0, since the hopping pattern #0 and the sequence shift pattern #0 are associated with each other, a pattern of a reference signal sequence assigned to predetermined physical channels and predetermined physical signals in a cell specified by the cell ID #0 is "0, 1, 2, 3, 4, 5, 6, 7, 8, 9, 10, 11, 12, 13, 14, 15, 16, 17, 18, 19".

Furthermore, when the cell ID is 1, since the hopping pattern #0 and the sequence shift pattern #1 are associated with each other, a pattern of a reference signal sequence assigned to the predetermined physical channels and the predetermined physical signals in a cell specified by the cell ID #1 is "1, 2, 3, 4, 5, 6, 7, 8, 9, 10, 11, 12, 13, 14, 15, 16, 17, 18, 19, 20".

In addition, when the cell ID is 30, since the hopping pattern #1 and the sequence shift pattern #0 are associated with each other, a pattern of a reference signal sequence assigned to the predetermined physical channels and the predetermined physical signals in a cell specified by the cell ID #30 is "1, 6, 2, 7, 3, 8, 4, 9, 0, 5, 12, 16, 11, 17, 13, 18, 14, 19, 10, 15".

Moreover, when the cell ID is 31, since the hopping pattern #1 and the sequence shift pattern #1 are associated with each other, a pattern of a reference signal sequence assigned to the predetermined physical channels and the predetermined physical signals in a cell specified by the cell ID #31 is "2, 7, 3, 8, 4, 9, 5, 10, 1, 6, 13, 17, 12, 18, 14, 19, 15, 20, 11, 16".

Here, in the cell specified by the cell ID #1 and the cell specified by the cell ID #30, since a signal sequence with a sequence number "#1" is commonly used, a collision occurs at the initial timing. However, since the hopping patterns are different from each other at a timing after the initial timing, no collision occurs.

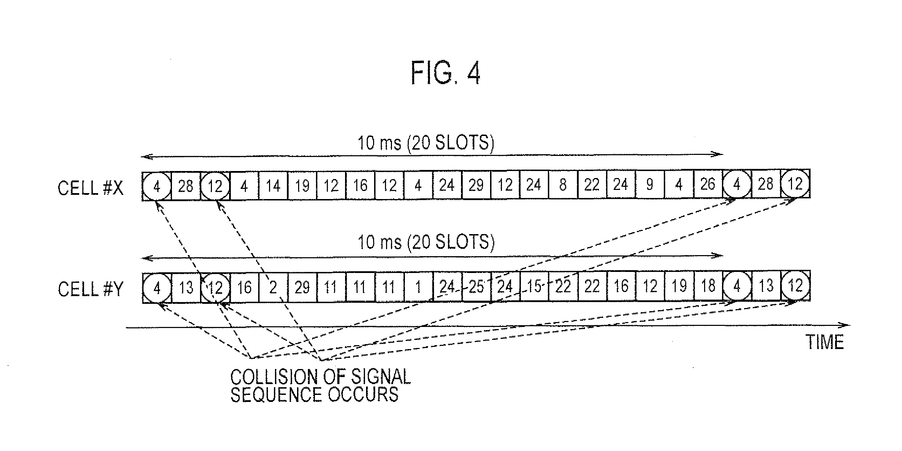

However, when the hopping cycle is set to "10 ms (20 slots)" as described above, if a collision of signal sequences constituting the reference signal sequence occurs once between cell #X and cell #Y as shown in Fig. 4, a problem may occur in which the collision of the signal sequences necessarily occurs every "10 ms" which is the hopping cycle.

Here, when synchronization is made between cells, it is possible to suppress the influence of the collision through cell design and transmission timing adjustment, but it is difficult to completely avoid the collision.

In addition, when no synchronization is made between cells, since it is not possible to understand a transmission timing in an adjacent cell, the avoidance of the collision through the transmission timing adjustment may not be possible.

Hereinafter, the influence of the above problems will be reviewed for the reference signal sequences assigned to the demodulation reference signal, the SRS and the PUCCH, respectively.

Firstly, the demodulation reference signal multiplexed to the PUSCH will be reviewed.

The case in which the demodulation reference signal has been multiplexed to the PUSCH will be explained. In such a case, the PUSCH and the demodulation reference signal are always transmitted at the same transmission timing. When the "Dynamic Scheduling" has been applied, the initial transmission timing of the PUSCH is determined by a scheduling process of the eNB. However, since there is basically no special cyclic nature in assigning a transmission opportunity, although the above-mentioned collision has occurred, it is less probable that the collision will be necessarily repeated as described above.

Furthermore, when the "Dynamic Scheduling" has been applied, since the retransmission timing of the PUSCH is determined as the timing having passed from the initial transmission timing by "Round Trip Delay (=8 ms)", although the above-mentioned collision has occurred between cells at the initial transmission, the demodulation reference signal sequence time-multiplexed to the PUSCH and a demodulation reference signal sequence to be time-multiplexed to the PUSCH to be retransmitted are different from each other between the cells by the above-mentioned hopping patterns. Therefore, it is less probable that the collision will be necessarily repeated in retransmission as described above.

On the other hand, when the "Semi-persistent Scheduling" has been applied, since the initial timing and the retransmission timing of the demodulation reference signal are repeated with a constant cycle (e.g., 20 ms cycle), if the above-mentioned collision occurs once, the collision is necessarily repeated as described above.

In such a case, since the radio base station eNB also receives an interference signal from an adjacent cell as a desired wave signal of an own cell, it is difficult to correctly measure the channel state of the own cell, and the error rate of the PUSCH may be increased due to a reduction in the degree of the accuracy of channel estimation.

Secondly, the SRS will be reviewed.

In the mobile communication system according to the present embodiment, the cycle of a transmission timing of the SRS is configured to be selected from 2 ms, 5 ms, 10 ms, 20 ms, 40 ms, 80 ms, 160 ms and 320 ms.

Thus, when 10 ms and 20 ms are selected from the standpoint of the number of multiplexed mobile stations UEs and channel fluctuation followability, if the above-mentioned collision occurs once, the collision is necessarily repeated, similarly to the example of Fig. 4.

In such a case, since the radio base station eNB also receives the interference signal from the adjacent cell as the desired wave signal of the own cell, it is difficult to correctly measure the quality of a propagation path, which has an adverse influence on a control of a scheduling process, an adaptive modulation process and the like of an uplink shared data channel. Furthermore, since it is also difficult to correctly measure the transmission timing between the radio base station eNB and the mobile station UE, it is not possible to appropriately control the transmission timing of the UE, resulting in a reduction in the system performance.

Thirdly, the PUCCH will be reviewed.

Uplink control information (e.g., CQI) is transmitted to the radio base station eNB by multiplexing codes between mobile stations using a reference signal sequence assigned to the PUCCH and a sequence obtained by cyclically shifting the reference signal sequence.

In the mobile communication system according to the present embodiment, the cycle of the timing at which the CQI is transmitted via the PUCCH is configured to be selected from 2 ms, 5 ms, 10 ms, 20 ms, 40 ms, 80 ms, and 160 ms.

Thus, similarly to the case of the SRS, when 10 ms and 20 ms are selected from the standpoint of the number of multiplexed mobile stations UEs and channel fluctuation followability, if the above-mentioned collision occurs once, the collision is necessarily repeated as described above.

In such a case, since the radio base station eNB also receives the PUCCH having used the same sequence, which is the interference signal from the adjacent cell, as the desired wave signal of the own cell, it is difficult to correctly demodulate the CQI via the PUCCH from the adjacent cell due to interference, which has an adverse influence on a control of a scheduling process, an adaptive modulation process and the like in a downlink, resulting in a degradation in the system performance.

Furthermore, since the demodulation reference signal is time-multiplexed and transmitted through the PUCCH, if the above-mentioned collision occurs once, the collision is necessarily repeated as described above, similarly to the case of the PUSCH when the "Dynamic Scheduling" has been applied and the case of the time-multiplexed demodulation reference signal.

In such a case, since the mobile station UE receives an interference signal from an adjacent cell as a desired wave signal of an own cell, it is difficult to correctly measure the channel state of the own cell, and to correctly demodulate the CQI due to a reduction in the degree of the accuracy of channel estimation, which has an adverse influence on a control of a scheduling process, an adaptive modulation process and the like in a downlink as described above, resulting in a degradation in the system performance.

In this regard, in order to solve the problems, in the mobile communication system according to the present embodiment, it is preferable to modify the applied "Group Hopping" as follows.

Specifically, for the reference signal sequences assigned to the demodulation reference signal, the SRS, and the PUCCH when the "Semi-persistent Scheduling" has been applied, it is preferable to calculate the reference signal sequences using the modified "Group Hopping".

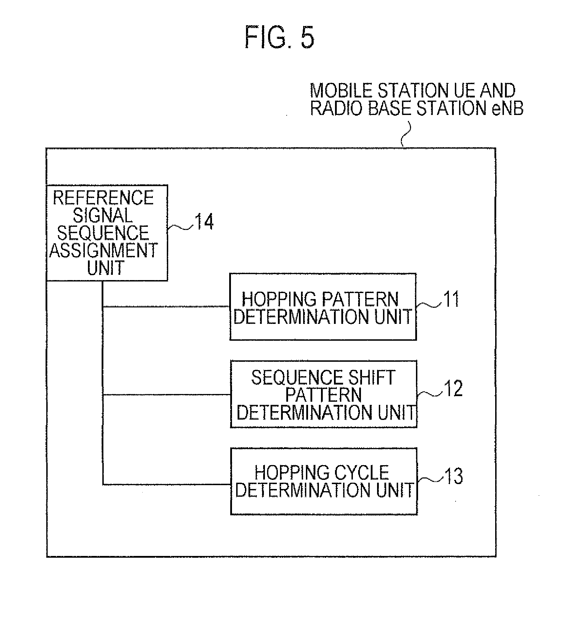

As shown in Fig. 5, the radio base station eNB and the mobile station UE in the mobile communication system according to the present embodiment include a hopping pattern determination unit 11, a sequence shift pattern determination unit 12, a hopping cycle determination unit 13, and a reference signal sequence assignment unit 14, respectively.

Specifically, in the mobile communication system according to the present embodiment, the hopping cycle determination unit 13 is configured to determine the above-mentioned hopping cycle, based on the cycle of a slot number and the cycle of SFN (System Frame Number).

In the mobile communication system according to the present embodiment, the cycle of the slot number is "20 (#0 to #19)" and the SFN cycle is "1024 (#0 to #1023)".

For example, the reference signal sequence assignment unit 14 may be configured to determine a sequence number "u" of signal sequences (constituting the reference signal sequence) assigned to each predetermined physical channel and predetermined physical signal in slot units, according to the following Equation 1 of:.

[Equation 1]

$$u = (f_{gh}(n_s) + f_{ss}) \bmod 30$$

$$f_{gh}(n_s) = \begin{cases} 0 & \text{(if group hopping is disabled)} \\ \left( \sum_{i=0}^{7} C(160 n_f + 8 n_s + i) \cdot 2^i \right) \bmod 30 & \text{(if group hopping is enabled)} \end{cases}$$

$$f_{ss}^{PUCCH} = N_{ID}^{cell} \bmod 30$$

$$f_{ss}^{PUSCH} = (f_{ss}^{PUCCH} + \Delta_{ss}) \bmod 30$$

$f_{gh}(n_s)$: hopping pattern

$f_{ss}^{PUCCH}$ : : sequence shift pattern for PUCCH and SRS  $f_{ss}^{PUSCH}$ : : sequence shift pattern for PUSCH

$n_f$: SFN (0 to 1023)

$n_s$: slot number (0 to 19)

$\Delta_{ss}$: parameter notified by broadcast information

c(i): each element of scrambling code

$N_{ID}^{cell}$ : : identification information of cell

Here, "c(i)" has a binary value of "0" or "1" and is an element constituting random sequences "C" (scramble codes), and "c(0)" to "c(163839)" may exist.

Here, a method for generating the random sequences "C" is defined in the 3GPP TS 36.211 7.2. For example, values obtained by converting the values of "c_init", which is the seed of a random number, to 31-bit binary numbers, are used as the initial values of a shift register, thereby generating the random sequences "C". Thus, if the values of the "c_init" are different from each other, the generated random sequences "C" are also different from each other.

Now, the following equation 1A is provided.

[Equation 1A]

$$C\_int = \lfloor N_{ID}^{cell} \rfloor$$

Thus, the values of the "c_init" are configured to be uniquely determined by the cell ID as represented by the Equation 1A above, and any one of the 17 hopping patterns is determined by the value of the cell ID.

The scramble codes, for example, are also used in a physical channel such as a PDSCH and a PUSCH, but are independent sequences because the values of the "c_init" thereof are different from each other.

Furthermore, whether or not to apply the "Group Hopping" is configured to be notified by broadcast information.

In addition, as represented by the Equation above, the hopping pattern determination unit 11 is configured to determine the hopping pattern $f_{gh}(n_s)$, based on a slot number "$n''_s$ and an SFN. "$n_f$" in predetermined physical channels (the PUCCH) or predetermined physical signals (the demodulation reference signal or the SRS).

Furthermore, as represented by the Equation 1 above, based on the identification information (the cell ID) of a cell to which the predetermined physical channels (the PUCCH) or the predetermined physical signals (the demodulation reference signal or the SRS) have been set, the sequence shift pattern determination unit 12 is configured to determine the sequence shift pattern as represented by the following Equation 1B.

[Equation 1B]

$$f_{ss}^{PUCCH} \quad \text{and} \quad f_{ss}^{PUSCH}$$

Here, by using the "Δss", it is possible to intentionally modify the sequence shift pattern for each PUSCH. Here, the "Δss" is configured to be notified by the broadcast information.

Furthermore, the reference signal sequence assignment unit 14 may be configured to determine the sequence number "u" of the signal sequences (constituting the reference signal sequence) assigned to each predetermined physical channel and predetermined physical signal in slot units, as represented by the Equation 2 below.

[Equation 2]

$$u = (f_{gh}(n_s) + f_{ss}) \bmod 30$$

$$f_{gh}(n_s) = \begin{cases} 0 & \text{(if group hopping is disabled)} \\ \left( \sum_{i=0}^{7} C(160(n_f \bmod X) + 8n_s + i) \cdot 2^i \right) \bmod 30 & \text{(if group hopping is enabled)} \end{cases}$$

$$f_{ss}^{PUCCH} = N_{ID}^{cell} \bmod 30$$

$$f_{ss}^{PUSCH} = (f_{ss}^{PUCCH} + \Delta_{ss}) \bmod 30$$

$f_{gh}(n_s)$: hopping pattern $f_{ss}^{PUCCH}$ : : sequence shift pattern for PUCCH and SRS $f_{ss}^{PUSCH}$ : : sequence shift pattern for PUSCH

$n_f$: SFN (0 to 1023)

$n_s$: slot number (0 to 19)

$\Delta_{ss}$: parameter notified by broadcast information

$c(i)$: each element of scrambling code

$N_{ID}^{cell}$ : : identification information of cell X: arbitrary integer

Here, the "X" may also be a divisor (e.g., "512") of the SFN cycle.

In addition, as represented by the Equation 2 above, the hopping pattern determination unit 11 is configured to determine the hopping pattern $f_{gh}(n_s)$, based on the slot number "$n_s$" and the SFN "$n_f$" in the predetermined physical channels (the PUCCH) or the predetermined physical signals (the demodulation reference signal or the SRS).

Furthermore, as represented by the Equation 2 above, based on the identification information (the cell ID) of the cell to which the predetermined physical channels (the PUCCH) or the predetermined physical signals (the demodulation reference signal or the SRS) have been set, the sequence shift pattern determination unit 12 is configured to determine the sequence shift pattern as represented by the following Equation 2A.

[Equation 2A]

$$f_{ss}^{PUCCH} \quad \text{and} \quad f_{ss}^{PUSCH}$$

Moreover, the reference signal sequence assignment unit 14 may be configured to determine the sequence number "u" of the signal sequences (constituting the reference signal sequence) assigned to each predetermined physical channel and predetermined physical signal in slot units, as represented by the Equation 3 below.

[Equation 3]

$$u = (f_{gh}(n_s) + f_{ss}) \bmod 30$$

$$f_{gh}(n_s) = \begin{cases} 0 & \text{(if group hopping is disabled)} \\ (\sum_{i=0}^{7} C(8((20_{nf} + n_s) \bmod Y) + i) \cdot 2^i) \bmod 30 & \text{(if group hopping is enabled)} \end{cases}$$

$$f_{ss}^{PUCCH} = N_{ID}^{cell} \bmod 30$$

$$f_{ss}^{PUSCH} = (f_{ss}^{PUCCH} + \Delta_{ss}) \bmod 30$$

$f_{gh}(n_s)$: hopping pattern $f_{SS}^{PUCCH}$ : : sequence shift pattern for PUCCH and SRS $f_{SS}^{PUSCH}$ :: sequence shift pattern for PUSCH

$n_f$: SFN. (0 to 1023) $n_s$: slot number (0 to 19)

$\Delta_{ss}$: parameter notified by broadcast information c(i): each element of scrambling code $N_{ID}^{cell}$ : : identification information of cell Y: prime number for 20

Here, the "Y" is a prime (e.g., "18", "19", and "21") for the cycle "20" of the slot number.

In addition, as represented by the Equation 3 above, the hopping pattern determination unit 11 is configured to determine the hopping pattern $f_{gh}(n_s)$, based on the slot number "$n_s$" and the SFN "$n_f$" in the predetermined physical channels (the PUCCH) or the predetermined physical signals (the demodulation reference signal or the SRS).

Furthermore, as represented by the Equation 3 above, based on the identification information (the cell ID) of the cell to which the predetermined physical channels (the PUCCH) or the predetermined physical signals (the demodulation reference signal or the SRS) have been set, the sequence shift pattern determination unit 12 is configured to determine the sequence shift pattern as represented by the following Equation 3A.

[Equation 3A]

$$f_{ss}^{PUCCH} \quad \text{and} \quad f_{ss}^{PUSCH}$$

In addition, the present embodiment has been explained based on the assumption that the hopping cycle determination unit 13 is configured to determine the above-mentioned hopping cycle based on the cycle of the slot number and the SFN cycle. However, when the SFN is unclear, it is not always necessary for the hopping cycle determination unit 13 to determine the above-mentioned hopping cycle based on the SFN.

That is, the hopping cycle determination unit 13 may determine the above-mentioned hopping cycle, based on only the slot number such that the reference signal sequence assignment unit 14 determines the sequence number "u" of the signal sequences (constituting the reference signal sequence) assigned to each predetermined physical channel and predetermined physical signal in slot units, as represented by the Equation 4 below.

[Equation 4]

$$u = (f_{gh}(n_s) + f_{ss}) \bmod 30$$

$$f_{gh}(n_s) = \begin{cases} 0 \\ \sum_{i=0}^{7} (C(8n_s + i) \cdot 2^i) \bmod 30 \end{cases}$$

In addition, as represented by the Equation 4 above, the hopping pattern determination unit 11 is configured to determine the hopping pattern $f_{gh}(n_s)$, based on the slot number "$n_s$" in the predetermined physical channels (the PUCCH) or the predetermined physical signals (the demodulation reference signal or the SRS).

Furthermore, as represented by the Equation 4 above, based on the identification information (the cell ID) of the cell to which the predetermined physical channels (the PUCCH) or the predetermined physical signals (the demodulation reference signal or the SRS) have been set, the sequence shift pattern determination unit 12 is configured to determine the sequence shift pattern as represented by the following Equation 4A.

[Equation 4A]

$$f_{ss}^{PUCCH} = N_{ID}^{cell} \bmod 30$$

$$f_{ss}^{PUSCH} = (f_{ss}^{PUCCH} + \Delta_{ss}) \bmod 30$$

For example, in the case in which the mobile station UE performs an inter-cell handover, when the SFN of a handover target has not been acquired, the reference signal sequence assignment unit 14 may determine the sequence number "u" of the signal sequences (constituting the reference signal sequence) assigned to each predetermined physical channel and predetermined physical signal in slot units based on the Equation 4 depending on only the slot number. After the completion of the handover and the like, when the SFN is acquired, the reference signal sequence assignment unit 14 may determine the sequence number "u" of the signal sequences (constituting the reference signal sequence) assigned to each predetermined physical channel and predetermined physical signal in slot units, based on the hopping pattern obtained by the Equation 1 depending on the above-mentioned SFN.

In the above-mentioned example, it is considered to apply the hopping cycle and the hopping pattern obtained from the two types of equations. However, it may be possible to apply hopping cycles and hopping patterns obtained from three or more types of equations.

When the hopping cycle and the hopping pattern obtained from a plurality of equations as described above are applied, the predetermined physical channels (the PUCCH) or the predetermined physical signals (the demodulation reference signal or the SRS), to which the reference signal sequences are applied, may be divided to groups, and hopping cycles and hopping patterns obtained from different equations may be applied to each group.

For example, when the hopping cycle and the hopping pattern obtained from two equations are applied, the predetermined physical channels (the PUCCH) or the predetermined physical signals (the demodulation reference signal or the SRS), to which the reference signal sequences are applied, may be divided to two groups, and hopping cycles and hopping patterns obtained from different equations may be applied to each group. In addition, in the above-mentioned example, the two equations are applied. However, three or more equations may be applied.

For example, the hopping pattern obtained by the Equation 4 may be applied to the demodulation reference signal of the PUSCH to which the "Dynamic scheduling" is applied, and the hopping pattern obtained by the Equation 1 may be applied to the demodulation reference signal of the PUSCH, the PUCCH, and the SRS to which the "Semi-persistent Scheduling" is applied.

Furthermore, the hopping pattern obtained by the Equation 4 may be applied to the case in which the SFN of a handover target has not been acquired in the inter-cell handover and the like, and the hopping pattern obtained by the Equation 1 may be applied to the case in which the SFN has been acquired after the completion of the inter-cell handover and the like.

A switching process of the hopping pattern according to whether or not the SFN is acquired may be applied to all predetermined physical channels or predetermined physical signals to which the reference signal sequences are applied, or may be applied only to a part of predetermined physical channels or predetermined physical signals. Furthermore, a hopping cycle and a hopping pattern obtained from one type of equation may be applied to the other predetermined physical channels or predetermined physical signals regardless of whether or not the SFN is acquired.

In more detail, the hopping pattern obtained by the Equation 4 may be applied only to message 3 in a random access sequence, and the hopping pattern obtained by the Equation 1 may be applied to uplink signals other than the message 3 in the random access sequence.

Otherwise the hopping pattern obtained by the Equation 4 may be applied only to message 3 and message 5 in the random access sequence, and the hopping pattern obtained by the Equation 1 may be applied to uplink signals other than the message 3 and the message 5 in the random access sequence.

In addition, the classification of the message 3 and others or the classification of the message 3, the message 5, and others are for illustrative purposes only. For example, through combinations other than the above, uplink signals, to which the hopping pattern obtained by the Equation 4 is applied, and uplink signals, to which the hopping pattern obtained by the Equation 1 is applied, may be classified.

In accordance with the mobile communication system according to the first embodiment of the present invention, the "Group Hopping" is applied, so that it is possible to reduce inter-cell interference without any complicated cell design although the reference signal sequences have been assigned.

Furthermore, in accordance with the mobile communication system according to the first embodiment of the present invention, the signal sequences assigned in slot units in each predetermined physical channel and predetermined physical signal are determined based on the Equation 1 above, so that the hopping cycle can be increased up to "10.24s". When a collision of the signal sequences has occurred between cells, an interval at which the collision necessarily occurs again is increased, so that it is possible to prevent the collision of the signal sequences from frequently occurring.

Furthermore, in accordance with the mobile communication system according to the first embodiment of the present invention, the signal sequences assigned in slot units in each predetermined physical channel and predetermined physical signal are determined based on Equation 2 above, so that it is possible to prevent the collision of the signal sequences from frequently occurring between cells while reducing the load of a memory for holding the hopping patterns, as compared with the case using the Equation 1 above.

Furthermore, in accordance with the mobile communication system according to the first embodiment of the present invention, the signal sequences assigned in slot units in each predetermined physical channel and predetermined physical signal are determined based on the Equation 3 above, so that the cycle of the transmission timing of the predetermined physical channel and the predetermined physical signal and the hopping cycle are relatively prime, and thus it is possible to prevent the collision of the signal sequences from frequently occurring between cells.

In addition, in accordance with the mobile communication system according to the first embodiment of the present invention, the hopping cycle is set as a cycle (e.g., "18 ms", "19 ms", and "21 ms") near "20 ms", so that it is possible to reduce an impact when an existing system is modified.

Moreover, in accordance with the mobile communication system according to the first embodiment of the present invention, in the case in which the SFN has not been acquired when performing an inter-cell handover and the like, a hopping pattern not requiring the SFN is applied, and in the case in which the SFN has been acquired after the completion of the handover and the like, a hopping pattern depending on the SFN is applied, so that it is possible to prevent the collision of the signal sequences from frequently occurring.

The operation of the above-described radio base station eNB and the mobile station UE may be implemented by a hardware, may also be implemented by a software module executed by a processor, and may further be implemented by the combination of the both.

The software module may be arranged in a storing medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

Such a storing medium is connected to the processor so that the processor can write and read information into and from the storing medium. Such a storing medium may also be accumulated in the processor. Such a storing medium and processor may be arranged in ASIC. Such ASIC may be arranged in the radio base station eNB and the mobile station UE. As a discrete component, such a storing medium and processor may be arranged in the radio base station eNB and the mobile station UE.

Thus, the present invention has been explained in detail by using the above-described embodiments; however, it is obvious that for persons skilled in the art, the present invention is not limited to the embodiments explained herein. The present invention can be implemented as a corrected, modified mode without departing from the gist and the scope of the present invention defined by the claims. Therefore, the description of the specification is intended for explaining the example only and does not impose any limited meaning to the present invention.

**Claims**

1. A mobile communication system configured to assign a reference signal sequence repeatedly used with a hopping cycle to at least one of a predetermined physical channel and a predetermined physical signal of an uplink, wherein the reference signal sequence includes a plurality of signal sequences assigned in slot units in the predetermined physical channel based on a hopping pattern and a sequence shift pattern;

   the hopping pattern is configured to be determined based on a slot number and an SFN in the predetermined physical channel or the predetermined physical signal, and identification information of a cell to which the predetermined physical channel or the predetermined physical signal has been set;

   the sequence shift pattern is configured to be determined based on the identification information of the cell to which the physical predetermined channel or the predetermined physical signal has been set; and
the hopping cycle is configured to be determined based on a cycle of the slot number and an SFN cycle.

2. The mobile communication system according to claim 1,
   wherein
   the predetermined physical channel is a physical uplink control channel and the predetermined physical signal is a demodulation reference signal or a sounding reference signal.

3. The mobile communication system according to claim 1,
   wherein
   a sequence number "u" of the signal sequences assigned in the slot units is configured to be determined by the following equation of:

[Equation A]

$$u = (f_{gh}(n_s) + f_{ss}) \bmod 30$$

$$f_{gh}(n_s) = \begin{cases} 0 & \text{(if group hopping is disabled)} \\ (\sum_{i=0}^{7} C(160 n_f + 8 n_s + i) \cdot 2^i) \bmod 30 & \text{(if group hopping is enabled)} \end{cases}$$

$$f_{ss}^{PUCCH} = N_{ID}^{cell} \bmod 30$$

$$f_{ss}^{PUSCH} = (f_{ss}^{PUCCH} + \Delta_{ss}) \bmod 30$$

$f_{gh}(n_s)$: hopping pattern

$f_{SS}^{PUCCH}$ : : sequence shift pattern for PUCCH and SRS $f_{SS}^{PUSCH}$ :: sequence shift pattern for PUSCH $n_f$: SFN (0 to 1023)
$n_s$: slot number (0 to 19)
$\Delta_{ss}$: parameter notified by broadcast information c(i): each element of scrambling code

$N_{ID}^{cell}$ : : identification information of cell

4. The mobile communication system according to claim 1,
   wherein
   a sequence number "u" of the signal sequences assigned in the slot units is configured to be determined by the following equation of:

[Equation B]

$$u = (f_{gh}(n_s) + f_{ss}) \bmod 30$$

$$f_{gh}(n_s) = \begin{cases} 0 & \text{(if group hopping is disabled)} \\ (\sum_{i=0}^{7} C(160(n_f \bmod X) + 8 n_s + i) \cdot 2^i) \bmod 30 & \text{(if group hopping is enabled)} \end{cases}$$

$$f_{ss}^{PUCCH} = N_{ID}^{cell} \bmod 30$$

$$f_{ss}^{PUSCH} = (f_{ss}^{PUCCH} + \Delta_{ss}) \bmod 30$$

$f_{gh}(n_s)$: hopping pattern

$f_{SS}^{PUCCH}$ : : sequence shift pattern for PUCCH and SRS $f_{SS}^{PUSCH}$ : : sequence shift pattern for PUSCH

$n_f$: SFN (0 to 1023)

$n_s$: slot number (0 to 19)

$\Delta_{ss}$: parameter notified by broadcast information c(i): each element of scrambling code

$N_{ID}^{cell}$ : : identification information of cell

X: arbitrary integer

**5.** The mobile communication system according to claim 1, wherein
a sequence number "u" of the signal sequences assigned in the slot units is configured to be determined by the following equation of:

[Equation C]

$$u = (f_{gh}(n_s) + f_{ss})\bmod 30$$

$$f_{gh}(n_s) = \begin{cases} 0 & \text{(if group hopping is disabled)} \\ (\sum_{i=0}^{7} C(8((20_{nf} + n_s)\bmod Y) + i)\cdot 2^i)\bmod 30 & \text{(if group hopping is enabled)} \end{cases}$$

$$f_{ss}^{PUCCH} = N_{ID}^{cell}\bmod 30$$

$$f_{ss}^{PUSCH} = (f_{ss}^{PUCCH} + \Delta_{ss})\bmod 30$$

$f_{gh}(n_s)$: hopping pattern

$f_{SS}^{PUCCH}$ : : sequence shift pattern for PUCCH and SRS $f_{SS}^{PUSCH}$ : : sequence shift pattern for PUSCH $n_f$: SFN (0 to 1023)

$n_s$: slot number (0 to 19)

$\Delta_{ss}$: parameter notified by broadcast information c(i): each element of scrambling code

$N_{ID}^{cell}$ : : identification information of cell

Y: prime number for 20

**6.** A radio base station comprising:

a reference signal sequence assignment unit configured to assign a reference signal sequence repeatedly used with a hopping cycle to at least one of a predetermined physical channel and a predetermined physical signal of an uplink;
a hopping pattern determination unit configured to determine a hopping pattern, based on a slot number and an SFN in the predetermined physical channel or the predetermined physical signal, and identification information of a cell to which the predetermined physical channel or the predetermined physical signal has been set;
a sequence shift pattern determination unit configured to determine a sequence shift pattern, based on the identification information of the cell to which the physical predetermined channel or the predetermined physical signal has been set; and
a hopping cycle determination unit configured to determine the hopping cycle, based on a cycle of the slot number and an SFN cycle; wherein
the reference signal sequence assignment unit is configured to generate the reference signal sequence using a plurality of signal sequences assigned in slot units in the predetermined physical channel, based on the hopping pattern and the sequence shift pattern.

7. The radio base station according to claim 6, wherein the predetermined physical channel is a physical uplink control channel and the predetermined physical signal is a demodulation reference signal or a sounding reference signal.

8. The radio base station according to claim 6, wherein the reference signal sequence assignment unit is configured to determine a sequence number "u" of the signal sequences assigned in the slot units by the following equation of:

[Equation D]

$$u = (f_{gh}(n_s) + f_{ss}) \bmod 30$$

$$f_{gh}(n_s) = \begin{cases} 0 & \text{(if group hopping is disabled)} \\ \left(\sum_{i=0}^{7} C(160n_f + 8n_s + i) \cdot 2^i\right) \bmod 30 & \text{(if group hopping is enabled)} \end{cases}$$

$$f_{ss}^{PUCCH} = N_{ID}^{cell} \bmod 30$$

$$f_{ss}^{PUSCH} = (f_{ss}^{PUCCH} + \Delta_{ss}) \bmod 30$$

$f_{gh}(n_s)$: hopping pattern

$f_{ss}^{PUCCH}$ : : sequence shift pattern for PUCCH and SRS $f_{ss}^{PUSCH}$ : : sequence shift pattern for PUSCH

$n_f$: SFN (0 to 1023)

$n_s$: slot number (0 to 19)

$\Delta_{ss}$: parameter notified by broadcast information

$c(i)$: each element of scrambling code

$N_{ID}^{cell}$ : : identification information of cell

9. The radio base station according to claim 6, wherein
the reference signal sequence assignment unit is configured to determine a sequence number "u" of the signal sequences assigned in the slot units by the following equation of:

[Equation E]

$$u = (f_{gh}(n_s) + f_{ss}) \bmod 30$$

$$f_{gh}(n_s) = \begin{cases} 0 & \text{(if group hopping is disabled)} \\ \left(\sum_{i=0}^{7} C(160(n_f \bmod X) + 8n_s + i) \cdot 2^i\right) \bmod 30 & \text{(if group hopping is enabled)} \end{cases}$$

$$f_{ss}^{PUCCH} = N_{ID}^{cell} \bmod 30$$

$$f_{ss}^{PUSCH} = (f_{ss}^{PUCCH} + \Delta_{ss}) \bmod 30$$

$f_{gh}(n_s)$ : hopping pattern

$f_{ss}^{PUCCH}$ : : sequence shift pattern for PUCCH and SRS

$f_{ss}^{PUSCH}$ : : sequence shift pattern for PUSCH

$n_f$: SFN (0 to 1023)

$n_s$: slot number (0 to 19)

$\Delta_{ss}$ : parameter notified by broadcast information

c(i): each element of scrambling code

$N_{ID}^{cell}$ : : identification information of cell

X: arbitrary integer

10. The radio base station according to claim 6, wherein the reference signal sequence assignment unit is configured to determine a sequence number "u" of the signal sequences assigned in the slot units by the following equation of:

[Equation F]

$$u = (f_{gh}(n_s) + f_{ss}) \bmod 30$$

$$f_{gh}(n_s) = \begin{cases} 0 & \text{(if group hopping is disabled)} \\ \left(\sum_{i=0}^{7} C(8((20_{nf} + n_s) \bmod Y) + i) \cdot 2^i \right) \bmod 30 & \text{(if group hopping is enabled)} \end{cases}$$

$$f_{ss}^{PUCCH} = N_{ID}^{cell} \bmod 30$$

$$f_{ss}^{PUSCH} = (f_{ss}^{PUCCH} + \Delta_{ss}) \bmod 30$$

$f_{gh}(n_s)$: hopping pattern

$f_{ss}^{PUCCH}$ : : sequence shift pattern for PUCCH and SRS $\quad f_{ss}^{PUSCH}$ : : sequence shift pattern for PUSCH

$n_f$: SFN (0 to 1023)

$n_s$: slot number (0 to 19)

$\Delta_{ss}$: parameter notified by broadcast information

c(i) : each element of scrambling code $\quad N_{ID}^{cell}$ : : identification information of cell

Y: prime number for 20

11. A mobile station comprising:

a reference signal sequence assignment unit configured to assign a reference signal sequence repeatedly used with a hopping cycle to at least one of a predetermined physical channel and a predetermined physical signal of an uplink;
a hopping pattern determination unit configured to determine a hopping pattern, based on a slot number and an SFN in the predetermined physical channel or the predetermined physical signal, and identification information of a cell to which the predetermined physical channel or the predetermined physical signal has been set;
a sequence shift pattern determination unit configured to determine a sequence shift pattern, based on the identification information of the cell to which the physical predetermined channel or the predetermined physical signal has been set; and
a hopping cycle determination unit configured to determine the hopping cycle, based on a cycle of the slot number and an SFN cycle; wherein
the reference signal sequence assignment unit is configured to generate the reference signal sequence using a plurality of signal sequences assigned in slot units in the predetermined physical channel, based on the hopping pattern and the sequence shift pattern.

12. The mobile station according to claim 11, wherein
the predetermined physical channel is a physical uplink control channel and the predetermined physical signal is a demodulation reference signal or a sounding reference signal.

13. The mobile station according to claim 11, wherein
the reference signal sequence assignment unit is configured to determine a sequence number "u" of the signal sequences assigned in the slot units by the following equation of:

[Equation G]

$$u = (f_{gh}(n_s) + f_{ss}) \bmod 30$$

$$f_{gh}(n_s) = \begin{cases} 0 & \text{(if group hopping is disabled)} \\ (\sum_{i=0}^{7} C(160n_f + 8n_s + i) \cdot 2^i) \bmod 30 & \text{(if group hopping is enabled)} \end{cases}$$

$$f_{ss}^{PUCCH} = N_{ID}^{cell} \bmod 30$$

$$f_{ss}^{PUSCH} = (f_{ss}^{PUCCH} + \Delta_{ss}) \bmod 30$$

$f_{gh}(n_s)$: hopping pattern

$f_{SS}^{PUCCH}$ : : sequence shift pattern for PUCCH and SRS $f_{SS}^{PUSCH}$ : : = sequence shift pattern for PUSCH

$n_f$: SFN (0 to 1023)

$n_s$: slot number (0 to 19)

$\Delta_{ss}$: parameter notified by broadcast information

c(i): each element of scrambling code $N_{ID}^{cell}$ : : identification information of cell

**14.** The mobile station according to claim 11, wherein
the reference signal sequence assignment unit is configured to determine a sequence number "u" of the signal sequences assigned in the slot units by the following equation of:

[Equation H]

$$u = (f_{gh}(n_s) + f_{ss}) \bmod 30$$

$$f_{gh}(n_s) = \begin{cases} 0 & \text{(if group hopping is disabled)} \\ (\sum_{i=0}^{7} C(160(n_f \bmod X) + 8n_s + i) \cdot 2^i) \bmod 30 & \text{(if group hopping is enabled)} \end{cases}$$

$$f_{ss}^{PUCCH} = N_{ID}^{cell} \bmod 30$$

$$f_{ss}^{PUSCH} = (f_{ss}^{PUCCH} + \Delta_{ss}) \bmod 30$$

$f_{gh}(n_s)$ : hopping pattern

$f_{SS}^{PUCCH}$ : :sequence shift pattern for PUCCH and SRS $f_{SS}^{PUSCH}$ : : sequence shift pattern for PUSCH $n_f$: SFN (0 to 1023)

$n_s$ : slot number (0 to 19)

$\Delta_{ss}$: parameter notified by broadcast information

c(i): each element of scrambling code

$N_{ID}^{cell}$ : identification information of cell

X: arbitrary integer

**15.** The mobile station according to claim 11, wherein
the reference signal sequence assignment unit is configured to determine a sequence number "u" of the signal sequences assigned in the slot units by the following equation of:

[Equation I]

$$u = (f_{gh}(n_s) + f_{ss}) \bmod 30$$

$$f_{gh}(n_s) = \begin{cases} 0 & \text{(if group hopping is disabled)} \\ (\sum_{i=0}^{7} C(8((20_{nf} + n_s) \bmod Y) + i) \cdot 2^i) \bmod 30 & \text{(if group hopping is enabled)} \end{cases}$$

$$f_{ss}^{PUCCH} = N_{ID}^{cell} \bmod 30$$

$$f_{ss}^{PUSCH} = (f_{ss}^{PUCCH} + \Delta_{ss}) \bmod 30$$

$f_{gh}(n_s)$ : hopping pattern

$f_{SS}^{PUCCH}$ : sequence shift pattern for PUCCH and SRS    $f_{SS}^{PUSCH}$ : sequence shift pattern for PUSCH

$n_f$: SFN (0 to 1023)

$n_s$: slot number (0 to 19)

$\Delta_{ss}$: parameter notified by broadcast information

c(i): each element of scrambling code    $N_{ID}^{cell}$ : identification information of cell

Y: prime number for 20

FIG. 1

RADIO BASE
STATION eNB

MOBILE
STATION
UE

PUSCH/PUCCH
(DEMODULATION REFERENCE SIGNAL)
SOUNDING REFERENCE SIGNAL

# FIG. 2

HOPPING PATTERN  ~#0   ~#1   · · ·   ~#16

SEQUENCE SHIFT PATTERN   #0~   #29~   #1 #2   #0 #1 #2   #0~ #23~   #1 #2

CELL #ID   #0   #503

## FIG. 3

◆IT IS ASSUMED THAT THE HOPPING PATTERNS #0 AND #1 ARE DEFINED AS
FOLLOWS (IN THE ACTUAL PATTERN, A RANDOM PATTERN IS DETERMINED
BY A SCRAMBLING CODE).
➢ HOPPING PATTERN #0=[0, 1, 2, 3, 4, 5, 6, 7, 8, 9, 10, 11, 12, 13, 14, 15, 16, 17, 18, 19]
➢ HOPPING PATTERN #1=[1, 6, 2, 7, 3, 8, 4, 9, 0, 5, 11, 16, 12, 17, 13, 18, 14, 19, 10, 15]

✓WHEN CELL ID=0, HOPPING PATTERN #0 AND SEQUENCE SHIFT PATTERN #0
REFERENCE SIGNAL SEQUENCE: [0, 1, 2, 3, 4, 5, 6, 7, 8, 9, 10, 11, 12, 13, 14, 15, 16, 17, 18, 19]

✓WHEN CELL ID=1, HOPPING PATTERN #0 AND SEQUENCE SHIFT PATTERN #1
REFERENCE SIGNAL SEQUENCE: [①, 2, 3, 4, 5, 6, 7, 8, 9, 10, 11, 12, 13, 14, 15, 16, 17, 18, 19, 20]

✓WHEN CELL ID=30, HOPPING PATTERN #1 AND SEQUENCE SHIFT PATTERN #0
REFERENCE SIGNAL SEQUENCE: [①, 6, 2, 7, 3, 8, 4, 9, 0, 5, 12, 16, 11, 17, 13, 18, 14, 19, 10, 15]

✓WHEN CELL ID=31, HOPPING PATTERN #1 AND SEQUENCE SHIFT PATTERN #1
REFERENCE SIGNAL SEQUENCE: [2, 7, 3, 8, 4, 9, 5, 10, 1, 6, 13, 17, 12, 18, 14, 19, 15, 20, 11, 16]

IN THE CASE OF CELL ID=1 AND CELL ID=30, THE SEQUENCE NUMBER IS
BOTH 1 AT THE INITIAL TIMING AND THUS COLLISION OCCURS; HOWEVER
SINCE THE HOPPING PATTERNS ARE DIFFERENT AFTER THIS TIMING, NO
COLLISION OCCURS.

## FIG. 4

CELL #X   10 ms (20 SLOTS)

| 4 | 28 | 12 | 4 | 14 | 19 | 12 | 16 | 12 | 4 | 24 | 29 | 12 | 24 | 8 | 22 | 24 | 9 | 4 | 26 | 4 | 28 | 12 |

CELL #Y   10 ms (20 SLOTS)

| 4 | 13 | 12 | 16 | 2 | 29 | 11 | 11 | 11 | 1 | 24 | 25 | 24 | 15 | 22 | 22 | 16 | 12 | 19 | 18 | 4 | 13 | 12 |

TIME

COLLISION OF SIGNAL
SEQUENCE OCCURS

EP 2 375 800 A1

# FIG. 5

MOBILE STATION UE AND
RADIO BASE STATION eNB

REFERENCE
SIGNAL
SEQUENCE
ASSIGNMENT
UNIT ~14

HOPPING PATTERN
DETERMINATION UNIT ~11

SEQUENCE SHIFT
PATTERN
DETERMINATION UNIT ~12

HOPPING CYCLE
DETERMINATION UNIT ~13

## INTERNATIONAL SEARCH REPORT

| | International application No. |
|---|---|
| | PCT/JP2009/071431 |

**A. CLASSIFICATION OF SUBJECT MATTER**
*H04W16/02*(2009.01)i, *H04B1/713*(2006.01)i, *H04J1/00*(2006.01)i, *H04J11/00* (2006.01)i, *H04W72/04*(2009.01)i

According to International Patent Classification (IPC) or to both national classification and IPC

**B. FIELDS SEARCHED**

Minimum documentation searched (classification system followed by classification symbols)
H04W4/00-99/00, H04B1/713, H04J1/00, H04J11/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | NTT DoCoMo, Fujitsu, Mitsubishi Electric, Sharp, Hopping and Planning of Sequence Groups for Uplink RS, 3GPP TSG RAN WG1 Meeting #51bis, R1-080241, 3GPP, 2008.01, p.1-4 | 1-15 |
| A | JP 2008-236430 A (NTT Docomo Inc.), 02 October 2008 (02.10.2008), entire text; all drawings & EP 2139256 A1 & WO 2008/114724 A1 & CA 2680872 A & KR 10-2009-0121369 A | 1-15 |
| A | WO 2008/044553 A1 (Matsushita Electric Industrial Co., Ltd.), 17 April 2008 (17.4.2008), entire text; all drawings & CA 2664913 A & EP 2071856 A1 | 1-15 |

☐ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 March, 2010 (24.03.10) | 06 April, 2010 (06.04.10) |

| Name and mailing address of the ISA/ | Authorized officer |
|---|---|
| Japanese Patent Office | |
| Facsimile No. | Telephone No. |

Form PCT/ISA/210 (second sheet) (July 2009)